(19) Europäisches Patentamt
European Patent Office
Office européen des brevets

(11) EP 1 541 339 A1

(12) # DEMANDE DE BREVET EUROPEEN

(43) Date de publication:
**15.06.2005 Bulletin 2005/24**

(21) Numéro de dépôt: **04292945.5**

(22) Date de dépôt: **10.12.2004**

(51) Int Cl.[7]: **B32B 27/18**, B32B 27/30, B29C 51/14, C07F 9/40, C08F 4/00, C08F 293/00, C08L 33/12, B29C 55/16

(84) Etats contractants désignés:
**AT BE BG CH CY CZ DE DK EE ES FI FR GB GR HU IE IS IT LI LT LU MC NL PL PT RO SE SI SK TR**
Etats d'extension désignés:
**AL BA HR LV MK YU**

(30) Priorité: **12.12.2003 FR 0314588**

(71) Demandeur: **Arkema**
**92800 Puteaux (FR)**

(72) Inventeurs:
- **Marot, Gilles**
  **27300 Bernay (FR)**
- **Silagy, David**
  **27000 Evreux (FR)**
- **Meunier, Gilles**
  **64230 Mazerolles (FR)**

(54) **Film acrylique multicouche à propriétes optique et mécaniques améliorees**

(57) Film acrylique multicouche comprenant :

- une couche (A) fabriquée à partir d'une composition thermoplastique acrylique comprenant de 75 à 95 % d'un (co)polymère méthacrylique contenant majoritairement des motifs méthacrylate de méthyle et de 5 à 25% d'un modifiant choc
- une couche (B) fabriquée à partir soit d'une composition comprenant un (co)polymère méthacrylique et un composé modifiant choc, soit d'une composition préparée par polymérisation séquentielle en émulsion aqueuse de systèmes de monomères à base d'acrylates, soit d'une composition comprenant un copolymère à blocs, et
- une couche (C) fabriquée à partir d'une composition thermoplastique acrylique comprenant de 75 à 95 % d'un (co)polymère méthacrylique contenant majoritairement des motifs méthacrylate de méthyle et de 5 à 25 % d'un modifiant choc.

Utilisation du film pour revêtir un substrat (résine thermoplastique, thermodurcissable, ...).

EP 1 541 339 A1

## Description

La présente invention concerne le domaine du revêtement d'articles en résine thermoplastique ou thermodurcissable par un film acrylique. Elle a plus particulièrement pour objet un film acrylique multicouche utilisable à cet effet, son utilisation dans la technique de décoration durant moulage, ainsi que les articles moulés ainsi revêtus.

Bien des articles en résine (ou matériau) thermoplastique ou thermodurcissable sont présents dans l'univers quotidien du consommateur. Ces résines telles que l'ABS (Acrylonitrile Butadiène Styrène), le PVC (polychlorure de vinyle), le PC (polycarbonate), le PP (polypropylène) et leurs mélanges, sont depuis longtemps largement utilisés pour la fabrication d'articles et de pièces moulés présents par exemple tant à l'intérieur qu'à l'extérieur des automobiles, pour la fabrication des matériaux destinés aux caravanes ou mobil-homes, ou encore intégrées dans les appareils ménagers si répandus dans les foyers. Ils sont notamment appréciés pour leurs excellentes propriétés mécaniques, ainsi que leur facilité de fabrication à grande échelle résultant en un coût sans cesse abaissé pour le consommateur.

Toutefois ce dernier a également le désir de compléter la fonction technique de ces matériaux, par l'amélioration de leur aspect esthétique, de manière à joindre l'agréable à l'utile. Ainsi, on peut souhaiter masquer l'aspect extérieur d'un article en résine thermoplastique, telle que celles citées précédemment (généralement jugé peu esthétique) par un revêtement en résine acrylique colorée, à l'aspect brillant plus flatteur à l'oeil. On peut aussi vouloir donner à un article constitué d'un matériau thermoplastique, ressenti comme artificiel, l'apparence d'un matériau naturel et plus traditionnel, comme le bois ou le cuir.

Les résines acryliques sont des polymères thermoplastiques qui sont de plus en plus utilisés en raison de leurs exceptionnelles propriétés optiques. On peut notamment citer leur aspect brillant, leur degré très élevé de transparence avec au moins 90 % de transmission de la lumière, leur dureté, leur aptitude au thermoformage, leur résistance au vieillissement, notamment aux agents atmosphériques (plus particulièrement aux UV), et à leur facilité de mise en forme.

Pour ces raisons tant techniques qu'esthétiques, on cherche fréquemment à revêtir les articles constitués d'une résine thermoplastique ou thermodurcissable par un film de résine acrylique. Ce dernier contribue donc particulièrement à la protection du substrat contre les agents atmosphériques, et améliore par conséquent le comportement au vieillissement des articles ou pièces correspondants (durabilité) .

Parmi les techniques de mise en forme appropriées à ce but, figure notamment la technique de décoration durant moulage, également connue sous la dénomination anglaise de "in-mold decoration".

Selon cette technique, un film acrylique, de préférence stocké sous forme de rouleau est, dans une 1$^{ère}$ étape (éventuellement précédée par un collage à chaud en continu avec un autre film ou substrat thermoplastique, dans une étape dénommée colaminage), préformé à la géométrie requise, de manière à épouser la surface interne du moule destiné à former l'article désiré. Dans une 2$^{ème}$ étape, la résine thermoplastique à l'état fondu est injectée dans le moule et mise en contact avec le film, ce qui a pour effet de le faire adhérer à la surface de l'article ainsi formé.

Une forme particulièrement préférée de réalisation de cette technique comprend la mise en oeuvre simultanée des 2 étapes précédemment décrites, au moyen d'un appareillage approprié. Cette forme de réalisation est désignée sous le terme de moulage avec insertion simultanée de film (en **A**nglais **F**ilm **I**nsert **M**olding ou **FIM**) .

Les films acryliques utilisés dans cette technique peuvent être utilisés tels quels, autrement dit en conservant leur transparence. Ils peuvent être également colorés, tout en conservant leur aspect brillant. Enfin, ils peuvent recevoir par un procédé d'impression un dessin, un motif, une image ou encore des caractères, du texte ou un logo propres à transmettre au consommateur une certaine information. Comme exemple d'impression, on peut citer celle d'un dessin imitant l'aspect du bois ou du cuir.

Les dessins ou motifs imprimés sur le film acrylique transparent peuvent donc être appliqués à la surface de l'article en résine thermoplastique, notamment par FIM. Le film ainsi imprimé améliore le vieillissement de l'article ainsi revêtu. De plus, portant le motif ou dessin imprimé sur celle de ses 2 surfaces qui est au contact du substrat, le film protège également le motif du contact avec les agents atmosphériques, et ajoute au dessin un effet de relief particulièrement flatteur pour l'oeil.

### [Art antérieur]

Le brevet **US 6147162** décrit un film acrylique monocouche fabriqué à partir d'une composition comprenant 50 à 95 % d'une résine acrylique spécifique, et 5 à 50 % d'un polymère acrylique à plusieurs couches, contenant une couche élastomérique. Ledit polymère (également connu par l'homme du métier sous la dénomination de modifiant choc) est dispersé dans la résine acrylique. Ce film est adapté à la technique de FIM, et procure une bonne dureté de surface à l'article ainsi revêtu.

Le brevet **EP 1000978 A1** décrit également un film acrylique fabriqué à partir d'une composition comprenant 50 à 95% d'une résine acrylique spécifique, et 5 à 50% d'un modifiant choc, convenant au revêtement par mise en oeuvre de la technique de FIM, et ayant une dureté de surface améliorée. Ce document mentionne par ailleurs un film

laminé (c'est-à-dire un film multicouche), et plus précisément un film bicouche, dont la couche interne est constituée de la composition précédemment décrite, et la couche externe d'une résine acrylique sans modifiant choc. Ce film bicouche, présenté comme ayant une excellente dureté de surface, peut de plus être enroulé sous la forme d'un rouleau.

Le brevet **US 6444298 B1** décrit un film acrylique laminé (ou encore multicouche) comprenant une couche contenant une résine acrylique et des particules d'élastomère acrylique (correspondant à un modifiant choc), dite couche flexible, et une couche contenant une résine acrylique sans modifiant choc, dite couche de surface. Un système à trois couches est également divulgué, dans lequel 2 couches de surface sont séparément collées sur les 2 surfaces de la couche flexible. Un tel film multicouche permet d'améliorer le traitement de coloration (notamment par immersion dans un bain), en évitant le blanchiment et l'affaiblissement de la coloration de la résine liés à la présence des modifiants chocs. Ce brevet recommande de veiller à ce que le rapport de l'épaisseur de la couche flexible sur l'épaisseur totale du film soit supérieur à 50 %, de préférence supérieur à 60 %.

La demande **US 2002/0136853 A1** décrit un film acrylique multicouche (bi- ou tricouche). Le film tricouche comprend une couche flexible composée d'une résine acrylique et de particules d'élastomère acrylique et deux couches de surface composée de résine acrylique éventuellement de particules d'élastomère acrylique. Il est recommandé de veiller à ce que le rapport de l'épaisseur de la couche flexible sur l'épaisseur totale du film soit supérieur à 50%, de préférence supérieur à 80%.

Les procédés d'impression sur film acrylique mentionnés précédemment nécessitent de plus, dans le cadre d'un procédé industriel hautement automatisé, le passage du film dans des rotatives où il est soumis à de très fortes contraintes de traction. Il doit, pour résister à ces dernières, présenter une élongation à la rupture (mesurée à température ambiante) élevée, par exemple supérieure à 50 %, de préférence à 55 %.

Le passage du film entre les cylindres présents dans les dispositifs d'impression, et sa capacité à s'enrouler lui-même sous forme de rouleau pour alimenter en continu de tels dispositifs, requièrent également une flexibilité très élevée, correspondant à un module élastique de traction (ou module d'Young) compris entre 500 et 1800 MPa, de préférence entre 700 et 1200 MPa.

Toutefois un module d'Young aussi élevé s'accompagne souvent d'une souplesse excessive du film, qui s'exerce au dépens de la capacité du film à résister aux rayures ou éraflures, du fait d'une moindre dureté. Or l'apparition de rayures est un inconvénient à éviter, à la fois pour des raisons esthétiques, et également parce que le substrat est alors exposé aux agents atmosphériques, notamment aux rayonnements UV, et est donc susceptible de présenter une moins bonne durabilité.

La présente invention a donc pour but d'obtenir un film acrylique qui, tout en maintenant ses qualités de transparence, possède simultanément une excellente dureté de surface lui permettant une résistance améliorée aux rayures, et une élongation à la rupture très élevée (lui permettant notamment de résister au passage dans les dispositifs d'impression), combinées avec un module élastique offrant la très bonne flexibilité nécessaire pour le stockage du film en rouleau.

Il a à présent été trouvé que ce but est atteint, en totalité ou en partie, par le film acrylique multicouche qui est décrit ci-après. Dans la suite du présent texte, tous les pourcentages indiqués sont, en l'absence d'autre précision, à considérer comme des pourcentages en poids.

## [DESCRIPTION]

L'invention a donc pour objet un film acrylique multicouche ayant une épaisseur comprise entre 40 et 300 μm, de préférence entre 70 et 100 μm, comprenant dans l'ordre :

- une **couche A** fabriquée à partir d'une composition thermoplastique acrylique (A) comprenant de 75 à 95% d'un (co)polymère méthacrylique contenant majoritairement des motifs méthacrylate de méthyle et de 5 à 25% d'un modifiant choc;
- une **couche B1** fabriquée à partir d'une composition (B1) comprenant de 10 à 50% d'un (co)polymère méthacrylique contenant majoritairement des motifs méthacrylate de méthyle et de 50 à 90 % d'un composé modifiant choc ;
- une **couche C** fabriquée à partir d'une composition thermoplastique acrylique (C) comprenant de 75 à 95% d'un (co)polymère méthacrylique contenant majoritairement des motifs méthacrylate de méthyle et de 5 à 25% d'un modifiant choc;

les couches A, B1 et C étant liées entre elles dans leurs zones de contact respectives.

De manière préférée, le rapport de l'épaisseur de la couche B1 sur l'épaisseur totale du film multicouche est compris entre 85 et 99 %, de préférence entre 88 et 95 %, et encore plus préférentiellement entre 88 et 92 %.

Selon une variante, l'invention a pour objet un film acrylique multicouche ayant une épaisseur comprise entre 40 et 300 μm, de préférence entre 70 et 100 μm, comprenant dans l'ordre :

- une **couche A** fabriquée à partir d'une composition thermoplastique acrylique (A) comprenant de 75 à 95% d'un (co)polymère méthacrylique contenant majoritairement des motifs méthacrylate de méthyle et de 5 à 25% d'un modifiant choc;
- une **couche B2** fabriquée à partir d'une composition (B2) susceptible d'être obtenue par le procédé comprenant :

1) la préparation par polymérisation séquentielle en émulsion aqueuse :

a) d'un premier copolymère, par réaction d'un système de monomères comprenant :

- de 75 à 99,8 % d'au moins un acrylate d'un radical alkyle comprenant de 1 à 8 atomes de carbone, et
- de 0,1 à 5% d'un agent de réticulation choisi parmi les esters polyacryliques et polyméthacryliques de polyols, les di ou trivinyl benzènes ou les esters vinyliques, et
- de 0,1 à 20 % d'au moins un agent de greffage choisi parmi les esters allylique, méthallylique ou crotonique d'un acide monocarboxylique ou dicarboxylique $\alpha$, $\beta$-insaturé ; puis

b) d'un second copolymère, en présence du système aqueux résultant de l'étape a), par réaction d'un système de monomères comprenant :

- de 10 à 90 % d'au moins un premier acrylate d'un radical alkyle comprenant de 1 à 8 atomes de carbone, et
- de 9 à 89,9 % d'au moins un second acrylate d'un radical alkyle comprenant de 1 à 8 atomes de carbone, distinct du premier, et
- 0,1 à 1 % d'au moins un agent de greffage choisi parmi les esters allylique, méthallylique, crotonique d'un acide monocarboxylique ou dicarboxylique $\alpha$, $\beta$-insaturé ; puis

c) d'un troisième copolymère, en présence du système aqueux résultant de l'étape b), par réaction d'un système de monomères comprenant :

- de 5 à 40 % d'au moins un acrylate d'un radical alkyle comprenant de 1 à 8 atomes de carbone, et
- de 60 à 95 % d'au moins un second acrylate d'un radical alkyle comprenant de 1 à 8 atomes de carbone, distinct du premier ; puis

d) d'un quatrième polymère, en présence du système aqueux résultant de l'étape c), par réaction d'un système de monomères comprenant :

- de 80 à 100 % d'au moins un acrylate d'un radical alkyle comprenant de 1 à 8 atomes de carbone, et
- de 0 à 20 % d'au moins un second acrylate d'un radical alkyle comprenant de 1 à 8 atomes de carbone, distinct du premier ;
  étant précisé que :
- le poids du copolymère obtenu à l'étape a) représente de 10 à 75 %, et
- le poids total des copolymères introduits dans les étapes b), c), d) représente de 25 à 90 %, par rapport au poids total de la composition comprenant les 4 copolymères obtenue après l'étape d) ; puis

2) le séchage de l'émulsion aqueuse ainsi obtenue; puis
3) éventuellement, la mise sous forme de granulés du produit ainsi séché;

- éventuellement une **couche C** fabriquée à partir d'une composition thermoplastique acrylique (C) comprenant de 75 à 95% d'un (co)polymère méthacrylique contenant majoritairement des motifs méthacrylate de méthyle et de 5 à 25 % d'un modifiant choc;

les couches A, B2 et éventuellement C étant liées entre elles dans leurs zones de contact respectives.

De manière préférée, le rapport de l'épaisseur de la couche B2 sur l'épaisseur totale du film multicouche est compris entre 85 et 99 %, de préférence entre 88 et 95 %, et encore plus préférentiellement entre 88 et 92 %.

Selon une autre variante, l'invention a pour objet un film acrylique multicouche ayant une épaisseur comprise entre 40 et 300 µm, de préférence entre 70 et 100 µm, comprenant dans l'ordre :

- une **couche A** fabriquée à partir d'une composition thermoplastique acrylique (A) comprenant de 75 à 95 % d'un (co)polymère méthacrylique contenant majoritairement des motifs méthacrylate de méthyle et de 5 à 25% d'un

modifiant choc;

- une **couche B3** fabriquée à partir d'une composition (B3) comprenant de 0 à 5 % en poids d'au moins un polymère A et de 95 à 100 % en poids d'au moins un copolymère à blocs de formule **B(-A)$_n$** composé d'un bloc B et de n blocs A obtenu par polymérisation radicalaire contrôlée à l'aide d'une alcoxyamine de formule **I(-T)$_n$** dans laquelle 1 désigne un groupement multivalent, T un nitroxyde et n un entier supérieur ou égal à 2 ;
- éventuellement une **couche C** fabriquée à partir d'une composition thermoplastique acrylique (C) comprenant de 75 à 95% d'un (co)polymère méthacrylique contenant majoritairement des motifs méthacrylate de méthyle et de 5 à 25 % d'un modifiant choc;

les couches A, B3 et éventuellement C étant liées entre elles dans leurs zones de contact respectives.

De manière préférée, le rapport de l'épaisseur de la couche B3 sur l'épaisseur totale du film multicouche est compris entre 85 et 99 %, de préférence entre 88 et 95 %, et encore plus préférentiellement entre 88 et 92 %.

La couche C est donc obligatoire lorsque la couche B est fabriquée à partir de (B1), et optionnelle lorsque la couche B est fabriquée à partir de (B2) ou à partir de (B3).

Le film acrylique multicouche qui vient d'être décrit sous ses trois variantes principales présente en raison de la combinaison de ses qualités de dureté de surface, d'élongation à la rupture, et de module élastique une aptitude particulière à l'application au revêtement des articles en résine les plus divers, notamment au moyen de la technique industrielle de décoration durant moulage. En raison de son degré de transparence élevé, combiné à ses propriétés avantageuses d'élongation à la rupture, le film convient également à l'impression de dessins ou motifs au moyen des procédés industriels d'impression à grande vitesse, lesquels dessins sont parfaitement visibles après revêtement de l'article en résine thermoplastique par le film, procurant ainsi un effet esthétique appréciable pour le consommateur, notamment un effet de relief flatteur au regard. Le film selon l'invention peut donc être enroulé sous forme de bobine et être ensuite utilisé dans des rotatives. Il présente en outre une très bonne résistance à la rayure et une bonne transparence.

De manière préférée, le rapport de l'épaisseur de la couche B1 (ou B2 ou B3) par rapport à l'épaisseur totale est compris entre 85 et 99 %, de préférence entre 88 et 95 %, et encore plus préférentiellement entre 88 et 92 %.de façon à conférer une flexibilité suffisante au film acrylique multicouche tout en conservant une élongation à la rupture élevée.

**[Description détaillée]**

**S'agissant du (co)polymère méthacrylique** des couches A et éventuellement C, ainsi que pour la composition (B1) de la couche B, celui-ci comprend majoritairement des motifs méthacrylate de méthyle. Ce (co)polymère méthacrylique ainsi défini est également dénommé par le terme de "matrice acrylique". Il comprend de 51 à 100 % de motifs méthacrylate de méthyle et de 0 à 49 % de motifs comonomères à insaturation éthylénique copolymérisables avec le méthacrylate de méthyle.

Les monomères à insaturation éthylénique copolymérisables avec le méthacrylate de méthyle sont notamment choisis parmi :

- les monomères acryliques de formule $CH_2$=CH-C(=O)-O-$R_1$ où $R_1$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy. Il peut s'agir par exemple de l'acide acrylique, de l'acrylate de méthyle, d'éthyle, de propyle, de n-butyle, d'isobutyle, de tertiobutyle, de 2-éthylhexyle, de glycidyle, des acrylates d'hydroxyalkyle, de l'acrylonitrile ;
- les monomères méthacryliques de formule $CH_2$=C($CH_3$)-C(=O)-O-$R_2$ où $R_2$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy. Il peut s'agir par exemple de l'acide méthacrylique, du méthacrylate de méthyle, d'éthyle, de propyle, de n-butyle, d'isobutyle, de tertiobutyle, de 2-éthylhexyle, de glycidyle, des méthacrylates d'hydroxyalkyle, du méthacrylonitrile ;
- les monomères vinylaromatiques. Il peut s'agir par exemple du styrène, des styrènes substitués tels que l'alpha-méthylstyrène, le monochlorostyrène, le tertbutyl styrène.

La matrice acrylique utilisable pour la fabrication des couches du film selon l'invention est généralement obtenue sous la forme de perles ou de granulés. Les perles sont obtenues par le procédé bien connu de polymérisation en suspension aqueuse du ou des monomères, en présence d'un amorceur soluble dans le ou les monomères, et d'un agent de suspension. Les granulés peuvent être obtenus à partir des perles qui sont fondues en extrudeuse pour former des joncs qui sont ensuite découpés. Les granulés peuvent aussi être préparés par polymérisation en masse, procédé bien connu, consistant à polymériser le ou les monomères ou bien un sirop de pré-polymère dissous dans le

ou les monomères, en présence d'un amorceur et d'un agent de transfert de chaîne pour contrôler la masse moléculaire du polymère. Le polymère obtenu est forcé en fin de ligne dans une filière pour obtenir des joncs qui sont ensuite découpés en granulés.

La couche A, la couche B1 fabriquée à partir de la composition (B1), et, le cas échéant, la couche C du film multicouche selon l'invention, sont préparées à partir de la matrice acrylique telle que décrite précédemment, étant entendu que la nature de ladite matrice peut être identique ou différente pour les couches concernées d'un même film multicouche selon l'invention. On préfère toutefois, pour des raisons de logistique industrielle, utiliser la même matrice acrylique pour les couches A et C. La couche C est optionnelle dans le cas où l'on utilise une couche B2 ou une couche B3.

On préfère utiliser comme matrice acrylique en vue de la fabrication de la composition (B1) de la couche B1, et/ou de la fabrication de la couche A et/ou C un copolymère comprenant de 80 à 99 % en poids de motifs méthacrylate de méthyle, et de 1 à 20 % de l'acide (méth)acrylique ou de l'ester correspondant avec un radical alkyle comprenant de 1 à 4 atomes de carbone. Selon une variante plus particulièrement préférée, le comonomère associé au motif méthacrylate de méthyle est l'acide acrylique, l'acrylate de méthyle ou l'acrylate d'éthyle. De manière avantageuse, il s'agit d'acrylate d'éthyle.

Dans les couches A, et éventuellement C, outre le (co)polymère méthacrylique, on trouve aussi un modifiant choc à raison de 75 à 95% du (co)polymère méthacrylique pour 5 à 25% du modifiant choc

**S'agissant du modifiant choc** utilisable pour les compositions (A), (B1) et éventuellement (C), celui-ci présente une structure à plusieurs couches, l'une au moins étant constituée par une phase élastomère. Etant donné que c'est la phase élastomère contenue dans le modifiant qui confère la résistance au choc, cet additif est ajouté à la matrice acrylique pour avoir une proportion convenable de l'élastomère.

Le modifiant choc utile dans l'invention peut être constitué par un copolymère séquencé comprenant au moins une séquence élastomère résultant de la polymérisation de monomères comme le butadiène, substitué ou non, les acrylates d'alkyle ou d'aralkyle. Ce peut être particulièrement un copolymère biséquencé, comme le poly(butadiène-bloc-méthacrylate de méthyle) ou un copolymère triséquencé comme le poly(styrène-bloc-butadiène-bloc-méthacrylate de méthyle) dans lesquels la phase élastomère polybutadiène représente jusqu'à 50 % environ en poids de la masse du copolymère séquencé. La séquence butadiène peut être non hydrogénée, partiellement ou totalement hydrogénée. Ce peut être aussi un poly (méthacrylate de méthyle - bloc - acrylate de butyle - bloc - méthacrylate de méthyle), des copolyétheresteramides à séquences polyamides et polyéthers, des copolymères à séquences polyesters et polyethers.

Le modifiant choc peut aussi être une substance polymère ayant une structure à plusieurs couches, l'une au moins étant constituée par une phase élastomère. Ces substances polymères peuvent ainsi être des particules obtenues par coagulation ou par séchage (notamment par pulvérisation ou atomisation) d'un latex élastomère. La fabrication de tels latex, utilisés pour le renforcement au choc de matrices thermoplastiques, est bien connue de l'homme de l'art. On sait notamment qu'en modifiant les conditions de fabrication de ces latex, on peut agir sur leur morphologie et, par voie de conséquence, sur leur aptitude à améliorer la résistance au choc et sur leur aptitude à maintenir les propriétés optiques de la matrice acrylique à renforcer. La taille de ces structures à plusieurs couches est généralement comprise entre 60 et 5000 nm, de préférence entre 80 et 300 nm.

Les différentes morphologies de latex élastomère connues à ce jour pourront être utilisées sans inconvénient dans le cadre de la présente invention. En particulier, on pourra utiliser un latex de morphologie "mou-dur" dont la première phase (ou coeur) est élastomère et dont la phase finale "dure" (ou couche externe) est un thermoplastique rigide. On entend par thermoplastique rigide, un (co)polymère dont la température de transition vitreuse ou Tg, est supérieure ou égale à 25°C.

On peut obtenir ces latex en deux étapes, par exemple :

- dans une première étape, par la polymérisation en émulsion, en milieu aqueux, en présence d'un amorceur engendrant des radicaux libres et d'un agent émulsifiant, d'au moins un monomère (dit "mou", c'est-à-dire un monomère conduisant à un polymère ayant une température de transition vitreuse inférieure à 25°C) devant constituer la phase élastomère, choisi par exemple parmi des monomères comme le butadiène, substitué ou non, et les acrylates d'alkyle ou d'aralkyle dans lesquels le groupe alkyle a de 4 à 15 atomes de carbone, puis
- dans une deuxième étape, également par la polymérisation en émulsion en milieu aqueux, en présence du polymère de la première étape, d'au moins un monomère devant constituer une phase "dure" compatible avec la matrice acrylique dont on veut améliorer la résistance au choc. Ce ou ces monomères (dits "durs", c'est-à-dire conduisant après polymérisation à un polymère ayant une température de transition vitreuse supérieure ou égale à 25°C) peuvent être choisis par exemple parmi les méthacrylates d'alkyle dans lesquels le groupe alkyle comprend de 1 à 4 atomes de carbone, les monomères vinylaromatiques comme le styrène et les styrènes substitués, les monomères acrylonitrile et méthacrylonitrile.

La phase "dure" peut aussi être obtenue à partir d'un mélange des monomères dur(s) précédents (en quantité majoritaire) et de comonomère(s) à insaturation éthylénique, comme un acrylate d'alkyle inférieur ou l'acide (méth) acrylique.

La polymérisation des monomères ne constituant pas la phase finale "dure" doit être effectuée en présence de monomères de réticulation et, éventuellement, de monomères de greffage. Ces monomères de réticulation et de greffage sont des monomères polyfonctionnels à insaturations éthyléniques copolymérisables avec les monomères ne constituant pas la phase finale "dure".

Le copolymère constituant la phase "dure" finale doit donc être formé en présence d'un monomère de réticulation. Comme monomères de réticulation bien connus que l'on peut utiliser, on peut citer les polyacrylates et les polyméthacrylates de polyols, tels que les diacrylates et les diméthacrylates d'alkylène glycol.

Comme monomères de greffage utilisables le cas échéant, on peut citer les esters d'allyle, tels que l'acrylate et le méthacrylate d'allyle.

On peut citer, comme mode de réalisation d'un composé modifiant choc de morphologie "mou-dur" celui préparé de la façon suivante. Une phase élastomère est préparée à partir d'un mélange comprenant au moins 50% d'acrylate d'alkyle ou d'aralkyle dans lequel le groupe alkyle a de 4 à 15 atomes de carbone, 0,05 à 5,0 % d'un monomère de réticulation, 0,05 à 5% de monomères de greffage, 0 à 10% d'un monomère hydrophile (tel que amides et esters alkyliques hydroxylés d'acide méthacrylique, l'acide (méth)acrylique), le reste étant éventuellement constitué par d'autres monomères copolymérisables à insaturation éthylénique (tel que le styrène). La phase thermoplastique rigide finale, polymérisée en présence de la phase élastomère, peut être obtenue à partir d'un mélange de monomères comprenant au moins 50 % en poids de méthacrylate d'alkyle, la phase élastomère et la phase thermoplastique présentant un degré minimal de rattachement chimique de 20 % environ.

On peut aussi utiliser comme composé modifiant choc à incorporer dans les compositions (A), (B1) et éventuellement (C) un latex de morphologie "dur-mou-dur". Dans une telle structure, la première phase (coeur ou noyau), non-élastomère, est polymérisée à partir des monomères pouvant constituer la matrice acrylique à renforcer ou la phase finale "dure" telle que définie précédemment. La phase intermédiaire est élastomère, et obtenue par exemple à partir des monomères dits "mous" tels que définis précédemment. Enfin la phase finale est formée également à partir des monomères utilisables pour la première phase.

En particulier, convient un latex tel que décrit dans le brevet **US 3793402** qui est formé :

(1) d'un coeur non élastomère, constitué par un copolymère obtenu à partir de:

- 80 à 100 % d'au moins un monomère dit "dur", comme un méthacrylate d'alkyle (alkyle en $C_1$-$C_4$), styrène, (méth)acrylonitrile éventuellement associé (à raison de 0 à 30 %) à un ou plusieurs comonomères à insaturation éthylénique, comme un (méth)acrylate d'alkyle inférieur (alkyle en $C_1$-$C_4$) et l'acide (méth)acrylique,
- 0 à 10 % en poids d'un monomère polyfonctionnel de réticulation et
- 0 à 10 % en poids d'un monomère de greffage, tels que ceux mentionnés précédemment,

(2) d'une couche intermédiaire élastomère, formée en présence du polymère (1), à partir de

- 50 à 99,9 % de monomère(s) butadiène, substitué ou non et/ou acrylate d'alkyle dans lequel le groupe alkyle a de 1 à 8 atomes de carbone,
- 0 à 49,9 % de comonomère(s) à insaturation éthylénique tels que des (méth)acrylates d'alkyle inférieur (alkyle en $C_1$-$C_4$), l'acide (méth)acrylique et le styrène,
- 0 à 5 % en poids d'un monomère polyfonctionnel de réticulation, et de
- 0,05 à 5 % en poids d'un monomère de greffage, tels que ceux mentionnés précédemment, et

(3) d'une couche externe dite "dure" ou de compatibilisation formée, en présence des polymères (1) et (2), à partir de monomères "durs" (méthacrylate d'alkyle en $C_1$-$C_4$, styrène, (méth)acrylonitrile) éventuellement associés (à raison de 0 à 30 %) à des comonomères à insaturation éthylénique comme un (méth)acrylate d'alkyle inférieur (alkyle en $C_1$-$C_4$). En particulier, les différentes phases, coeur (1), couche intermédiaire (2) et couche externe (3) représentent, respectivement, en poids, 10 à 40 %, 20 à 60 % et 10 à 70 % de la masse totale du copolymère du composite tricouches ou (triphases).

On peut enfin incorporer dans les compositions (A), (B1) et éventuellement (C) un produit de morphologie mou/dur/mou/dur comme il est décrit dans le document **EP-B-270865** qui comprend (1) un noyau central à base d'un élastomère réticulé intimement mélangé à une résine thermoplastique (co)polymère méthacrylique, (2) une première couche éventuelle de ladite résine greffée sur le noyau central, (3) une deuxième couche d'élastomère réticulé greffé sur ladite première couche ou sur ledit noyau et (4) une troisième couche de résine greffée sur ladite deuxième couche

d'élastomère réticulé.

D'autres morphologies utilisables pour les compositions (A), (B1) et éventuellement (C) sont celles, plus complexes, décrites dans les brevets **US-A-4052525** et **FR-A-2446296**.

Le modifiant choc incorporé dans les compositions (A), (B1) et éventuellement (C) se présente, avantageusement, sous la forme d'une substance polymère ayant une structure à plusieurs couches. Un composé modifiant choc de morphologie "mou-dur" est plus particulièrement préféré. Les modifiants choc appréciés pour l'invention sont les suivants :

- DURASTRENGTH D320 de la société ATOFINA ;
- IRH70 de la société Mitsubishi (bicouche mou/dur avec un coeur mou en copolymère butadiène-acrylate de butyle et écorce dure en homométhacrylate de méthyle);
- KM355 de la société Rhom et Haas (bicouche mou/dur avec un coeur mou en copolymère butadiène-acrylate de butyle et écorce dure en homométhacrylate de méthyle).

  Il n'est pas nécessaire que chacune des compositions (A), (B1) et éventuellement (C), comprenne le même type de modifiant choc. Pour des raisons de logistique cependant, il peut être souhaitable que ce soit le même modifiant choc.

**S'agissant de la composition (A) de la couche A et (C) de la couche C éventuelle,** celles-ci comprennent de 75 à 95% d'un (co)polymère méthacrylique contenant majoritairement des motifs méthacrylate de méthyle et de 5 à 25% d'un modifiant choc.

De préférence, elles comprennent de 80 à 95% d'un (co)polymère méthacrylique contenant majoritairement des motifs méthacrylate de méthyle et de 5 à 20% d'un modifiant choc.

**Selon une variante préférée, on utilise la couche B1** telle que définie précédemment. qui contient outre la matrice acrylique au moins un modifiant choc. On préfère une composition (B1) comprenant de 30 à 50 % de la matrice acrylique et de 50 à 70 % d'un modifiant choc.

**Selon une autre variante, on utilise la couche (B2)** telle que définie précédemment. Il est fait référence au brevet US 4141935 en ce qui concerne le procédé d'obtention de la composition (B2).

Dans l'étape (1) du procédé décrit dans le brevet **US 4141935**, on préfère mettre en oeuvre comme monomère dans l'étape (a) un acrylate d'un radical alkyle comprenant de 4 à 8 atomes de carbone. S'agissant des agents de réticulation que l'on peut ajouter au système de monomères, on peut citer comme exemple d'esters polyacryliques et polyméthacryliques de polyols : le di(méth)acrylate de butanediol, le tri(méth)acrylate de triméthylolpropane, et comme exemple d'esters vinyliques l'acrylate de vinyle.

S'agissant de l'étape (b), on utilise selon une variante préférée :

- de 10 à 90 % d'au moins un premier acrylate d'un radical alkyle comprenant de 1 à 4 atomes de carbone, et
- de 9 à 89,9 % d'au moins un second acrylate d'un radical alkyle comprenant de 4 à 8 atomes de carbone, distinct du premier.

Selon une autre variante préférée de cette étape (b), prise ou non en combinaison avec la précédente, on ajoute au système de monomères de 0 à 5% d'un agent de réticulation tel que défini précédemment pour l'étape (a).

S'agissant de l'étape (c), on préfère utiliser comme système de monomères :

- de 5 à 40 % d'au moins un acrylate d'un radical alkyle comprenant de 4 à 8 atomes de carbone, et
- de 60 à 95 % d'au moins un second acrylate d'un radical alkyle comprenant de 1 à 4 atomes de carbone, distinct du premier.

Selon une autre variante préférée prise ou non en combinaison avec la précédente, on ajoute au système de monomères de 0 à 5% d'un agent de réticulation et de 0 à 1 % d'au moins un agent de greffage tels que définis précédemment pour l'étape (a), ainsi que de de 0 à 5 % d'un agent limitateur de chaîne choisi parmi un alkylmercaptan ayant de 1 à 20 atomes de carbone.

S'agissant de l'étape (d), on préfère utiliser comme système de monomères :

- de 80 à 100 % d'au moins un acrylate d'un radical alkyle comprenant de 4 à 8 atomes de carbone, et
- de 0 à 20 % d'au moins un second acrylate d'un radical alkyle comprenant de 1 à 4 atomes de carbone, distinct du premier.

Selon une autre variante préférée de cette même étape (d), prise ou non en combinaison avec la précédente, on ajoute au système de monomères mis en oeuvre de 0 à 5% d'un agent de réticulation, de 0 à 1 % d'au moins un

agent de greffage et de 0 à 5 % d'un agent limitateur de chaîne tels que définis précédemment pour l'étape (c), et 0 à 5 % de l'acide (méth)acrylique.
Selon une autre variante préférée de l'étape (1) du procédé d'obtention de la composition (B2), on utilise comme agent de réticulation un diacrylate d'alkylène, et comme agent de greffage un (méth)acrylate d'allyle.
L'étape (2) de préparation de la composition (B2) consiste à sécher l'émulsion aqueuse obtenue à l'issue de l'étape (1) par tout moyen connu de l'homme du métier, notamment par coagulation ou atomisation.
**Selon encore une autre variante, la couche B3 est fabriquée à partir de la composition (B3)** qui comprend de 0 à 5 % en poids d'au moins un polymère A, et de 95 à 100 % en poids d'au moins un copolymère à blocs **B(-A)$_n$** préparé par polymérisation radicalaire contrôlée. La préparation de ce copolymère à blocs consiste à:

- polymériser à une température comprise entre 60 et 150°C d'un mélange de monomères $B_0$ en présence d'une alkoxyamine de formule $I(-T)_n$ jusqu'à un taux de conversion de 90%, puis
- éliminer une partie ou a totalité des monomères $B_0$ n'ayant pas réagi, puis
- ajouter et polymériser un mélange de monomère $A_0$, puis
- éliminer la totalité des monomères n'ayant pas réagi et la récupération du copolymère $B(-A)_n$.

Le bloc B présent dans le copolymère bloc compris dans la composition (B3) présente une température de transition vitreuse (Tg) inférieure à 0°C, une masse moyenne en poids ($M_w$) comprise entre 40000 et 200000 g/mol et un indice de polydispersité (Ip) compris entre 1,1 et 2,5 et de préférence entre 1,1 et 2,0. Ce bloc B est obtenu par la polymérisation d'un mélange de monomères $B_0$ comprenant :

- de 60 à 100% en poids d'au moins un monomère (méth)acrylique $b_1$ de formule $CH_2=CH-C(=O)-O-R_1$ ou $CH_2=C(CH_3)-C(=O)-O-R_1$ où $R_1$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy. Il peut s'agir par exemple de l'acide acrylique, de l'acrylate de méthyle, d'éthyle, de propyle, de n-butyle, d'isobutyle, de tertiobutyle, de 2-éthylhexyle, de glycidyle, des acrylates d'hydroxyalkyle, de l'acrylonitrile. On peut citer notamment l'acrylate de butyle, d'octyle, de nonyle, de 2-éthyl héxyle, les acrylate de polyéthylène glygol ou l'acrylonitrile.
- de 0 à 40% en poids d'au moins un autre monomère $b_2$ choisi parmi les monomères polymérisables par voie radicalaire tels que les monomères éthyléniques, vinylaromatiques et similaires. Il peut s'agir par exemple du styrène, des styrènes substitués tels que l'alpha-méthylstyrène, le monochlorostyrène, le tertbutyl styrène.

On préfère utiliser comme monomère(s) entrant dans la constitution du bloc B l'acrylate de butyle et le styrène.
Le bloc A présent dans le copolymère bloc compris dans la composition (B3) présente une température de transition vitreuse (Tg) supérieure à 50°C. Le bloc A est obtenu par la polymérisation d'un mélange de monomères $A_0$ comprenant :

- de 60 à 100 % en poids d'au moins un monomère (méth)acrylique $a_1$ de formule $CH_2=CH-C(=O)-O-R_1$ ou $CH_2=C(CH_3)-C(=O)-O-R_1$ où $R_1$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy. Il peut s'agir par exemple de l'acide acrylique, de l'acrylate de méthyle, d'éthyle, de propyle, de n-butyle, d'isobutyle, de tertiobutyle, de 2-éthylhexyle, de glycidyle, des acrylates d'hydroxyalkyle, de l'acrylonitrile. On peut citer notamment l'acrylate de butyle, d'octyle, de nonyle, de 2-éthyl héxyle, les acrylate de polyéthylène glygol ou l'acrylonitrile.
- de 0 à 40 % en poids d'au moins un monomère $a_2$ choisi parmi les anhydrides tels que l'anhydride maléique ou des monomères vinylaromatiques tels que le styrène

ou ses dérivés, en particulier l'alpha-méthyl styrène.
On préfère utiliser comme monomère entrant dans la constitution du bloc A un mélange de méthacrylate de méthyle et d'acrylate de butyle.
L'alkoxyamine utilisée a pour formule $I(-T)_n$ dans laquelle I est un groupement organique répondant à l'une des formules suivantes :

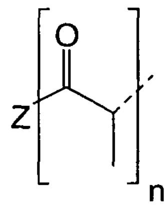

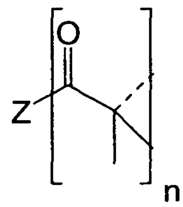

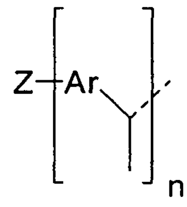

Ia Ib Ic

dans lesquelles :

- Ar désigne un groupement aromatique substitué,
- Z est un radical organique polyfonctionnel de masse molaire supérieure ou égale à 14, et
- n est un entier supérieur ou égal à 2.

On peut citer comme significations possibles de Z les groupements ou radicaux suivants :

- un groupement polyalcoxy en particulier dialcoxy tels que les radicaux $-OCH_2CH_2O-$, $-OCH_2CH_2CH_2O-$, $-O(CH_2)_4O-$, $-O(CH_2)_5O$, $-O(CH_2)_6O-$, le 1,3,5-tris(2-éthoxy) acide cyanurique,
- une polyaminoamine telle que les polyéthylènes amines, le 1,3,5-tris(2-éthylamino) acide cyanurique,
- un polythioxy, phosphonate ou polyphosphonate.

Dans la formule $I(-T)_n$, n représente la fonctionnalité de l'alcoxyamine, c'est-à-dire le nombre de radicaux nitroxydes T libérables par l'alcoxyamine selon le mécanisme :

$$I(-T)_n \rightleftarrows 1 + n\,T$$

Cette réaction est activée par la température. En présence de monomère(s), l'alcoxyamine activée amorce une polymérisation. Le schéma ci-dessous illustre la préparation d'un copolymère A-B-A (ou $B(-A)_2$) à partir d'une alcoxyamine pour laquelle n=2. Le mélange de monomère $B_0$ est d'abord polymérisé après activation de l'alcoxyamine pour donner le bloc B, puis une fois le bloc B terminé, le mélange de monomères $A_0$ est ensuite polymérisé pour donner les deux blocs A. B est un bloc polymère qui est lié directement à I par une liaison covalente, et qui est obtenu par la polymérisation d'un mélange de monomères $B_0$ , A est un bloc polymère qui est lié directement au bloc B par une liaison covalente et qui est obtenu par la polymérisation d'un mélange de monomères $A_0$ :

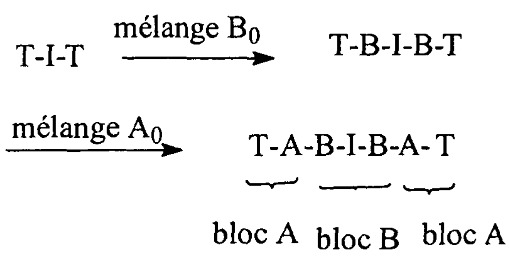


Le principe de la préparation de copolymères à blocs reste valable pour n>2.
T désigne un nitroxyde de formule

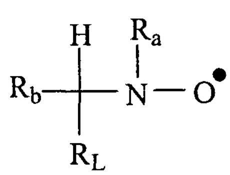

avec $R_a$ et $R_b$ désignant des groupements alkyles identiques ou différents possédant de 1 à 40 atomes de carbone, éventuellement reliés entre eux de façon à former un cycle et éventuellement substitués par des groupements hydroxy, alcoxy ou amino,

et $R_L$ désignant un groupement monovalent de masse molaire supérieur à 16 g/mol, de préférence supérieur à 30 g/mol. Le groupement $R_L$ peut par exemple avoir une masse molaire comprise entre 40 et 450 g/mol. Il s'agit de préférence d'un groupement phosphoré de formule générale:

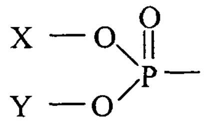

dans laquelle X et Y, pouvant être identiques ou différents, peuvent être choisis parmi les radicaux alkyle, cycloalkyle, alkoxyle, aryloxyle, aryle, aralkyloxyle, perfluoroalkyle, aralkyle et peuvent comprendre de 1 à 20 atomes de carbone ; X et/ou Y peuvent également être un atome d'halogène comme un atome de chlore, de brome ou de fluor.

De manière avantageuse, $R_L$ est un groupement phosphonate de formule :

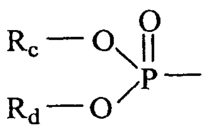

dans lequel $R_c$ et $R_d$ sont deux groupements alkyles identiques ou différents, éventuellement reliés de manière à former un cycle, comprenant de 1 à 40 atomes de carbone, éventuellement substitués ou non.

Le groupement $R_L$ peut également comprendre au moins un cycle aromatique tel que le radical phényle ou le radical naphtyle, substitué par exemple par un ou plusieurs radical(aux) alkyle comprenant de 1 à 10 atomes de carbone.

Le nitroxyde T utilisé de préférence répond à la formule suivante :

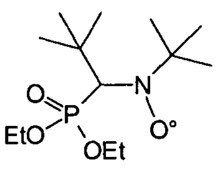

Il peut s'agir aussi du nitroxyde suivant :

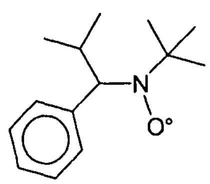

De préférence, l'alcoxyamine est choisie parmi les composés répondant à l'une des formules suivantes :

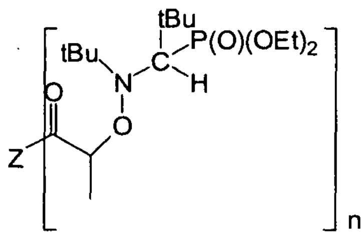

IIa

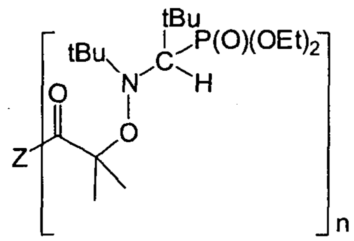

IIb

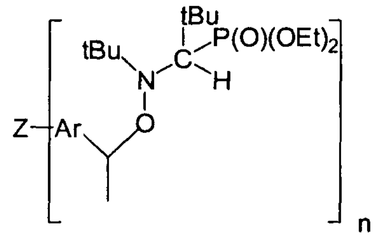

IIc

dans lesquelles Z et Ar sont tels que définis précédemment.

Les alcoxyamines suivantes sont tout particulièrement préférées :

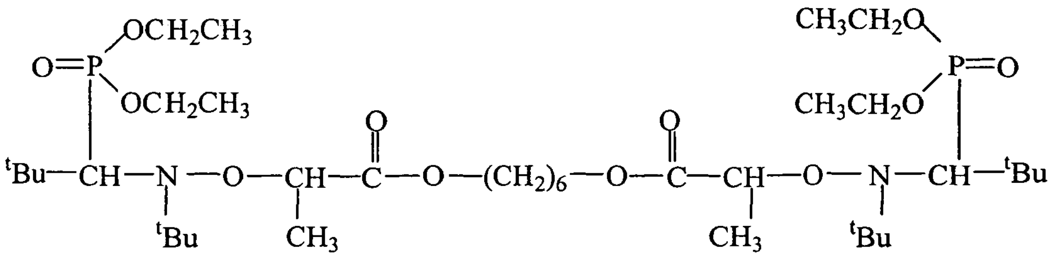

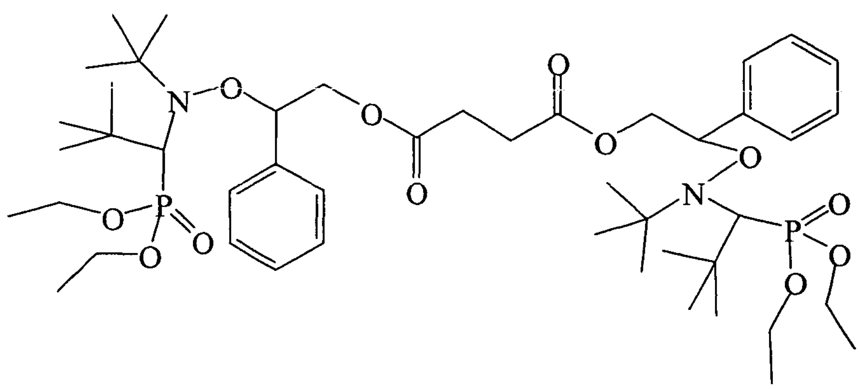

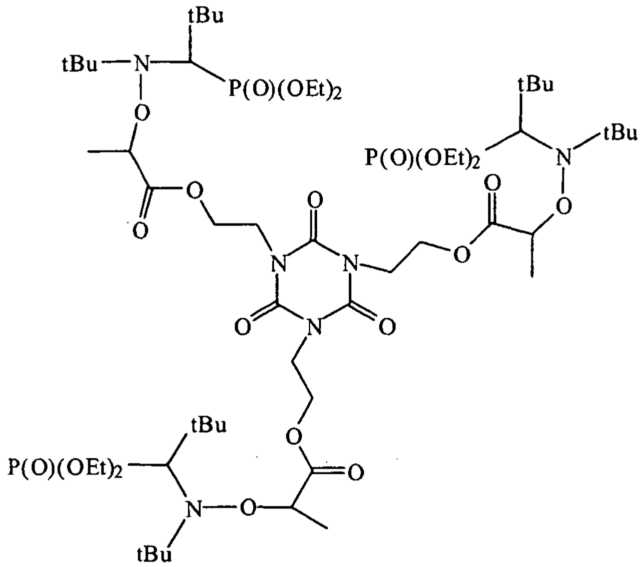

Lors de la formation du bloc A, il peut y avoir une perte de contrôle de la polymérisation notamment à cause du mécanisme décrit ci-dessous qui correspond à une réaction de transfert au nitroxyde :

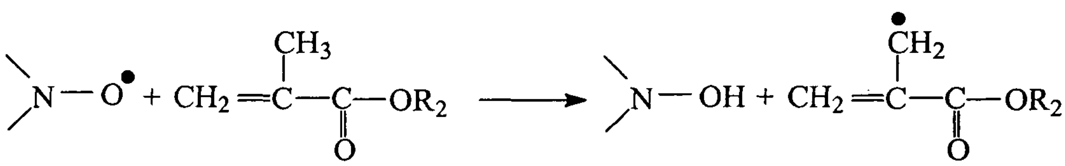

Lors de la formation du bloc A, la perte de contrôle peut entraîner la formation de polymère A. On trouve ainsi dans la composition (B3) de 0 à 5 % en poids du polymère A pour 95 à 100 % de copolymère à bloc **B(-A)$_n$.**

Le groupement I présent dans le copolymère à blocs compris dans la composition (B3) répond à l'une des formules générales Ia, Ib ou Ic telles que définies précédemment. Ces composés sont issus de la décomposition thermique de l'alcoxyamine correspondante de formule (IIa), (IIb) ou (IIc). Le radical Z inclus dans les formules générales Ia, Ib ou Ic est associé à n fonctions de type acryl dans la formule **Ia,** à n fonctions type méthacryl dans la formule **Ib** et à n fonctions de type styryl dans **Ic.**

La masse moléculaire moyenne en poids ($M_w$) du copolymère à blocs B(-A)$_n$ est comprise entre 80000 g/mol et 300000 g/mol avec une polydispersité comprise entre 1,5 et 2,5.

Etant donné que des monomères issus du bloc B peuvent entrer dans la composition du bloc A, pour décrire complètement le copolymère, il convient de préciser sa teneur globale en monomères propre au bloc B et le ratio entre bloc B et bloc A. Ces deux ratios ne sont pas nécessairement égaux. Le copolymère B(-A)$_n$ contient entre 60% et 10% en poids de monomères du bloc B et de préférence entre 50 et 25%. La proportion de bloc B dans le copolymère à blocs est comprise entre 10 et 50%, de préférence entre 20 et 50%.

A titre d'exemple de copolymère à bloc B(-A)n, on peut citer les copolymères triblocs suivants (dans ce cas n=2) :

PMMA-b-polyacrylate de n-butyle-b-PMMA
PMMA-b-poly(acrylate de n-butyle-co-styrène)-b-PMMA
PMMA-b-poly(acrylate d'isobutyle-co-styrène)-b-PMMA
poly(méthacrylate de méthyle-co-acrylate de n-butyle)-b-poly(acrylate de n-butyle-co-styrène)-b-poly(méthacrylate de méthyle-co-acrylate de n-butyle).

**S'agissant du film acrylique multicouche,** celui-ci est fabriqué par coextrusion selon une technique habituelle dans le domaine des thermoplastiques. Les compositions destinées à la fabrication des couches A, $B_{1-3}$ et le cas échéant C, des films selon l'invention se présentent généralement sous la forme de granulés. Selon cette technique,

on force la matière correspondant aux différentes couches (introduite sous forme de granulés et fondue) à travers des filières plates disposées très proches les unes des autres. L'association des matières fondues forme le film multicouche que l'on refroidit par passage sur des rouleaux à température contrôlée. En ajustant les vitesses de rouleaux disposés dans le sens longitudinal et/ou transversal, on peut provoquer un étirage dans le sens longitudinal et/ou dans le sens transversal, lequel avec la géométrie utilisée pour les filières permet de contrôler les épaisseurs des différentes couches.

Les compositions thermoplastiques décrites précédemment utilisées pour fabriquer les différentes couches du film multicouche (A, $B_{1-3}$, C) peuvent contenir chacune des additifs usuels, tels que lubrifiant, stabilisant UV, antistatique, colorant, antioxydant, charge minérale en une quantité de 0 à 5 % en poids par rapport à la composition.

La présente invention a également pour objet l'utilisation du film acrylique multicouche tel que défini précédemment pour la technique de décoration durant moulage d'articles en résine thermoplastique, et plus particulièrement pour la technique de moulage avec insertion simultanée de film.

Le film selon l'invention peut être utilisé pour revêtir un substrat. **S'agissant du substrat pouvant être revêtu** par le film acrylique multicouche de l'invention, celui-ci peut être un substrat en une résine thermoplastique. La résine thermoplastique peut être :

- une polyoléfine telle que du polyéthylène (par ex. PEHD, PE métallocène, PELD, PELDL), du polypropylène, ou un copolymère éthylène-propylène ;
- une résine chlorée telle que du PVC, PVC plastifié, polyéthylène chloré ;
- du polycarbonate ;
- une résine acrylonitrile-butadiène-styrène (ABS) ;
- un polymère ou copolymère contenant du styrène tel que le polystyrène, le SAN;
- un polyester saturé (PET, PBT,...) ;
- un polymère de l'éthylène et d'acétate de vinyle (EVA) ou de l'éthylène et d'acrylate d'alkyle, éventuellement en présence d'un termonomère par exemple l'anhydride maléïque ;
- un polyamide ou copolyamide ;
- un polyesteramide ;
- un copolymère de l'éthylène et de l'alcool vinylique (EVOH) ;
- un polyuréthane.

On ne sortirait pas du cadre de la présente invention en mélangeant plusieurs résines thermoplastiques. Par exemple, il pourrait s'agir d'un mélange de deux polyoléfines, de polycarbonate et d'ABS.

Le substrat peut être aussi en une résine thermodurcissable *(thermoset* en Anglais). Il peut s'agir par exemple de :

- résine phénolique ;
- résine époxy ;
- résine mélamine ;
- résine mélamine-formol ;
- résine mélamine-phénol ;
- résine urée-formol.

Une liste de résines envisageables est donnée dans *Ullmann 's Encyclopaedia of Industrial Chemistry,* 5$^{ème}$ éd., Vol.A20, « Plastics, general survey », pp. 549-552.

Le substrat peut aussi être en bois, bois aggloméré, un matériel cellulosique, acier, aluminium, bois recouvert d'une couche de résine mélamine, mélamine-formol, mélamine-phénol. De préférence, le film acrylique est utilisé pour revêtir une résine thermoplastique, par exemple selon la technique de **FIM**.

Le film acrylique de l'invention vient revêtir le substrat et on obtient donc une structure multicouche du type :

substrat / couche C / couche B1 / couche A
substrat / couche C / couche B2 / couche A
substrat / couche B2 / couche A
substrat / couche C / couche B3 / couche A
substrat / couche B3 / couche A

Un agent d'adhésion peut être éventuellement utilisé pour assurer l'adhésion du film sur le substrat. L'agent d'adhésion est alors disposé entre le substrat et le film acrylique. Les structures suivantes sont alors obtenues :

substrat / agent d'adhésion / couche C / couche B1 / couche A
substrat / agent d'adhésion / couche C / couche B2 / couche A
substrat / agent d'adhésion / couche B2 / couche A
substrat / agent d'adhésion / couche C / couche B3 / couche A
substrat / agent d'adhésion / couche B3 / couche A

L'agent d'adhésion peut être constitué d'une colle ou d'un film polymère permettant d'assurer l'adhésion entre le substrat et la couche du film acrylique en contact avec le substrat.

**[Exemple]**

L'exemple suivant est donné à titre purement illustratif de l'invention, et ne saurait être en aucun cas interprété comme devant en limiter la portée.

Les méthodes d'évaluation du film multicouche sont les suivantes :

- degré de transparence (ou Haze) : ASTM D1003
- élongation à la rupture et module élastique : ASTM D882
- dureté de surface mesurée par rétention de gloss après test de lavage selon la méthode PSA D245359/B publiée par la société Peugeot-Citroën.
- aspect brillant (ou gloss) : ASTM D523

Couches A et C :

On utilise un copolymère comprenant 99,4% de motifs méthacrylate de méthyle et 0,6% d'acrylate d'éthyle qui est disponible commercialement sous forme de granulés (Altuglas® V825 de la société ATOGLAS).

On utilise comme modifiant choc un système bicouche MOU/DUR, dans lequel le coeur mou est un copolymère de butadiène et d'acrylate de butyle, et l'écorce dure est un homopolymère de méthacrylate de méthyle qui est disponible commercialement sous forme de poudre (IRH70® de la société Mitsubishi).

On mélange le modifiant choc et les granulés de matrice acrylique, de manière à avoir une teneur en modifiant choc de 20% en poids. Le mélange s'effectue à environ 200°C dans une extrudeuse à double vis, résultant en plusieurs joncs extrudés qui sont ensuite coupés en forme de granulés.

Couche B :

On utilise comme matrice acrylique un copolymère comprenant 75% en poids de motifs méthacrylate de méthyle, et 25 % d'acrylate d'éthyle, sous forme de granulés.

On utilise comme modifiant choc un système bicouche MOU/DUR dans lequel le coeur mou est un copolymère de butadiène et d'acrylate de butyle, et l'écorce dure est un homopolymère de méthacrylate de méthyle qui est disponible commercialement sous forme de poudre (KM355® auprès de la société Rhom et Haas).

On mélange le modifiant choc et les granulés de matrice acrylique, de manière à avoir une teneur en modifiant choc de 60% en poids. Le mélange s'effectue à environ 200°C dans une extrudeuse à double vis, résultant en plusieurs joncs extrudés qui sont ensuite coupés en forme de granulés.

Les granulés destinés à la couche B sont introduits dans une extrudeuse monovis de 30 mm de diamètre et les granulés destinés aux couches A et C sont introduits dans 2 extrudeuses monovis de 20 mm de diamètre. Ces 3 extrudeuses alimentent une filière de coextrusion de forme annulaire de 50 mm de diamètre, portée à une température de 240 °C. L'adhésion entre les 3 couches est donc réalisée à l'état fondu.

Le film à 3 couches en forme de cylindre est formé en continu, étiré vers le haut par un dispositif adapté et gonflé par de l'air introduit par l'intérieur de la filière de forme annulaire. La gaine de film ainsi formée est également refroidie de l'extérieur, au moyen de jets d'air issus d'un anneau concentrique à la filière annulaire.

La gaine de film est coupée selon une génératrice, et le film tricouche est enroulé sur une bobine.

On mesure par microscopie optique l'épaisseur des 3 couches :

| | |
|---|---|
| épaisseur de la couche A | 5 µm |
| épaisseur de la couche couche B | 80 µm |
| épaisseur de la couche couche C | 5 µm. |

La mise en oeuvre des méthodes d'évaluation identifiées précédemment conduit aux résultats suivants :

Haze = 2,5 %.
Elongation à la rupture = 80 %
Module élastique = 980 Mpa
Dureté = 80 %
Gloss (mesuré à 20°) = 81

## Revendications

1. Film acrylique multicouche ayant une épaisseur comprise entre 40 et 300 µm, de préférence entre 70 et 100 µm, comprenant dans l'ordre :

   - une **couche A** fabriquée à partir d'une composition thermoplastique acrylique (A) comprenant de 75 à 95 % d'un (co)polymère méthacrylique contenant majoritairement des motifs méthacrylate de méthyle et de 5 à 25 % d'un modifiant choc;
   - une **couche B1** fabriquée à partir d'une composition (B1) comprenant de 10 à 50% d'un (co)polymère méthacrylique contenant majoritairement des motifs méthacrylate de méthyle et de 50 à 90 % d'un modifiant choc ;
   - une **couche C** fabriquée à partir d'une composition thermoplastique acrylique (C) comprenant de 75 à 95 % d'un (co)polymère méthacrylique contenant majoritairement des motifs méthacrylate de méthyle et de 5 à 25 % d'un modifiant choc;

   les couches A, B1 et C étant liées entre elles dans leurs zones de contact respectives.

2. Film selon la revendication 1, **caractérisé en ce que** le rapport de l'épaisseur de la couche B1 sur l'épaisseur totale du film multicouche est compris entre 85 et 99 %, de préférence entre 88 et 95 %, et encore plus préférentiellement entre 88 et 92%.

3. Film selon les revendications 1 ou 2, **caractérisé en ce que** la composition (B1) comprend de 30 à 50 % d'un (co) polymère méthacrylique, et de 50 à 70 % d'un modifiant choc.

4. Film selon la revendication 1 à 3, **caractérisé en ce que** le modifiant choc se présente sous la forme d'une substance polymère ayant une structure à plusieurs couches.

5. Film selon la revendication 4, **caractérisé en ce que** le modifiant choc a une morphologie "mou-dur".

6. Film selon les revendications 4 et 5, **caractérisé en ce que** le modifiant choc est le DURASTRENGTH 320, l'IRH 70 ou le KM355.

7. Film acrylique multicouche ayant une épaisseur comprise entre 40 et 300 µm, de préférence entre 70 et 100 µm, comprenant dans l'ordre :

   - une **couche A** fabriquée à partir d'une composition thermoplastique acrylique (A) comprenant de 75 à 95% d'un (co)polymère méthacrylique contenant majoritairement des motifs méthacrylate de méthyle et de 5 à 25% d'un modifiant choc;
   - une **couche B2** fabriquée à partir d'une composition (B2) susceptible d'être obtenue par le procédé comprenant :

     1) la préparation par polymérisation séquentielle en émulsion aqueuse :

        a) d'un premier copolymère, par réaction d'un système de monomères comprenant :

        - de 75 à 99,8 % d'au moins un acrylate d'un radical alkyle comprenant de 1 à 8 atomes de carbone, et
        - de 0,1 à 5 % d'un agent de réticulation choisi parmi les esters polyacryliques et polyméthacryliques de polyols, les di ou trivinyl benzènes ou les esters vinyliques, et
        - de 0,1 à 20 % d'au moins un agent de greffage choisi parmi les esters allylique, méthallylique ou crotonique d'un acide monocarboxylique ou dicarboxylique $\alpha$, $\beta$-insaturé ; puis

b) d'un second copolymère, en présence du système aqueux résultant de l'étape a), par réaction d'un système de monomères comprenant :

- de 10 à 90 % d'au moins un premier acrylate d'un radical alkyle comprenant de 1 à 8 atomes de carbone, et
- de 9 à 89,9 % d'au moins un second acrylate d'un radical alkyle comprenant de 1 à 8 atomes de carbone, distinct du premier, et
- 0,1 à 1 % d'au moins un agent de greffage choisi parmi les esters allylique, méthallylique, crotonique d'un acide monocarboxylique ou dicarboxylique α, β-insaturé ; puis

c) d'un troisième copolymère, en présence du système aqueux résultant de l'étape b), par réaction d'un système de monomères comprenant :

- de 5 à 40 % d'au moins un acrylate d'un radical alkyle comprenant de 1 à 8 atomes de carbone, et
- de 60 à 95 % d'au moins un second acrylate d'un radical alkyle comprenant de 1 à 8 atomes de carbone, distinct du premier ; puis

d) d'un quatrième polymère, en présence du système aqueux résultant de l'étape c), par réaction d'un système de monomères comprenant :

- de 80 à 100 % d'au moins un acrylate d'un radical alkyle comprenant de 1 à 8 atomes de carbone, et
- de 0 à 20 % d'au moins un second acrylate d'un radical alkyle comprenant de 1 à 8 atomes de carbone, distinct du premier ;

étant précisé que :

- le poids du copolymère obtenu à l'étape a) représente de 10 à 75 %, et
- le poids total des copolymères introduits dans les étapes b), c), d) représente de 25 à 90 %, par rapport au poids total de la composition comprenant les 4 copolymères obtenue après l'étape d) ; puis

2) le séchage de l'émulsion aqueuse ainsi obtenue; puis
3) éventuellement, la mise sous forme de granulés du produit ainsi séché;

- éventuellement une **couche C** fabriquée à partir d'une composition thermoplastique acrylique (C) comprenant de 75 à 95% d'un (co)polymère méthacrylique contenant majoritairement des motifs méthacrylate de méthyle et de 5 à 25% d'un modifiant choc;

les couches A, B2 et éventuellement C étant liées entre elles dans leurs zones de contact respectives.

**8.** Film selon la revendication 7, **caractérisé en ce que** le rapport de l'épaisseur de la couche B2 sur l'épaisseur totale du film multicouche est compris entre 85 et 99%, de préférence entre 88 et 95%, et encore plus préférentiellement entre 88 et 92%.

**9.** Film acrylique multicouche ayant une épaisseur comprise entre 40 et 300 µm, de préférence entre 70 et 100 µm, comprenant dans l'ordre :

- une **couche A** fabriquée à partir d'une composition thermoplastique acrylique (A) comprenant de 75 à 95 % d'un (co)polymère méthacrylique contenant majoritairement des motifs méthacrylate de méthyle et de 5 à 25% d'un modifiant choc;
- une **couche B3** fabriquée à partir d'une composition (B3) comprenant de 0 à 5 % en poids d'au moins un polymère A et de 95 à 100 % en poids d'au moins un copolymère à blocs de formule $\mathbf{B(-A)_n}$ composé d'un bloc B et de n blocs A obtenu par polymérisation radicalaire contrôlée à l'aide d'une alcoxyamine de formule $\mathbf{I(-T)_n}$ dans laquelle I désigne un groupement organique, T un nitroxyde et n un entier supérieur ou égal à 2 ;
- éventuellement une **couche C** fabriquée à partir d'une composition thermoplastique acrylique (C) comprenant de 75 à 95 % d'un (co)polymère méthacrylique contenant majoritairement des motifs méthacrylate de méthyle et de 5 à 25 % d'un modifiant choc;

les couches A, B3 et éventuellement C étant liées entre elles dans leurs zones de contact respectives.

**10.** Film selon la revendication 9, **caractérisé en ce que** le rapport de l'épaisseur de la couche B3 sur l'épaisseur totale du film multicouche est compris entre 85 et 99%, de préférence entre 88 et 95%, et encore plus préférentiellement entre 88 et 92%.

**11.** Film selon les revendications 9 et 10, **caractérisé en ce que** le bloc B est obtenu par la polymérisation d'un mélange de monomères $B_0$ comprenant :

- de 60 à 100% en poids d'au moins un monomère (méth)acrylique $b_1$ de formule $CH_2$=CH-C(=O)-O-$R_1$ ou $CH_2$=C($CH_3$)-C(=O)-O-$R_1$ où $R_1$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy ;
- de 0 à 40% en poids d'au moins un autre monomère $b_2$ choisi parmi les monomères polymérisables par voie radicalaire tels que les monomères éthyléniques, vinylaromatiques et similaires.

**12.** Film selon les revendications 9 à 11, **caractérisé en ce que** le bloc B présente une température de transition vitreuse inférieure à 0°C, une masse moyenne en poids comprise entre 40000 et 200000 g/mol et un indice de polymolécularité compris entre 1,1 et 2,5, de préférence entre 1,1 et 2,0.

**13.** Film selon les revendication 9 à 12, **caractérisé en ce que** le bloc A est obtenu par la polymérisation d'un mélange de monomères $A_0$ comprenant :

- de 60 à 100% en poids d'au moins un monomère (méth)acrylique $a_1$ de formule $CH_2$=CH-C(=O)-O-$R_1$ ou $CH_2$=C($CH_3$)-C(=O)-O-$R_1$ où $R_1$ désigne un atome d'hydrogène, un groupement alkyle en $C_1$-$C_{40}$ linéaire, cyclique ou ramifié éventuellement substitué par un atome d'halogène, un groupement hydroxy, alcoxy, cyano, amino ou époxy ;
- de 0 à 40 % en poids d'au moins un monomère $a_2$ choisi parmi les anhydrides tels que l'anhydride maléique ou des monomères vinylaromatiques tels que le styrène ou ses dérivés, en particulier l'alphaméthyl styrène.

**14.** Film selon les revendications 9 à 13, **caractérisé en ce que** le bloc A présente une température de transition vitreuse supérieure à 50°C.

**15.** Film selon les revendications 9 à 14, **caractérisé en ce que** I est un groupement organique répondant à l'une des formules suivantes :

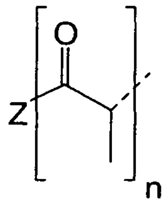

Ia

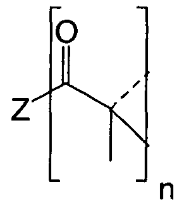

Ib

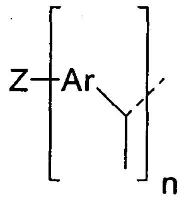

Ic

dans lesquelles :

- Ar désigne un groupement aromatique substitué,
- Z est un radical organique polyfonctionnel de masse molaire supérieure ou égale à 14, et
- n est un entier supérieur ou égal à 2.

**16.** Film selon les revendications 9 à 15, **caractérisé en ce que** l'alcoxyamine est choisie parmi les composés répondant à l'une des formules suivantes :

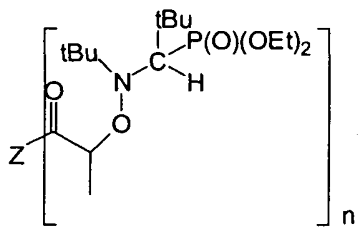

IIa

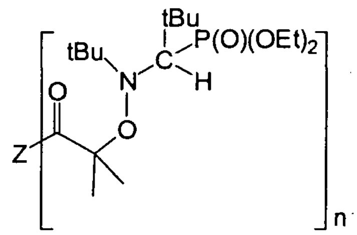

IIb

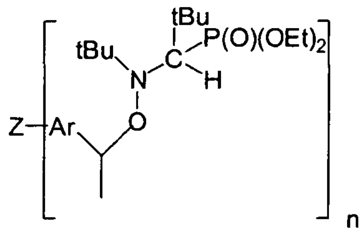

IIc

dans lesquelles :

- Ar désigne un groupement aromatique substitué,
- Z est un radical organique polyfonctionnel de masse molaire supérieure ou égale à 14, et
- n est un entier supérieur ou égal à 2.

**17.** Film selon les revendications 9 à 15, dans laquelle T désigne un nitroxyde de formule

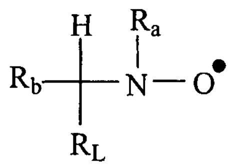

avec $R_a$ et $R_b$ désignant des groupements alkyles identiques ou différents possédant de 1 à 40 atomes de carbone, éventuellement reliés entre eux de façon à former un cycle et éventuellement substitués par des groupements hydroxy, alcoxy ou amino,

et $R_L$ désignant un groupement monovalent de masse molaire supérieur à 16 g/mol, de préférence supérieur à 30 g/mol.

**18.** Film selon la revendication 17, **caractérisé en ce que** le nitroxyde T répond à la formule :

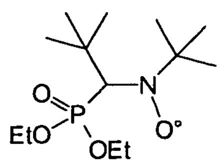

**19.** Film selon les revendications 1 à 18, **caractérisé en ce que** le (co)polymère méthacrylique utilisé pour la fabrication des couches (A) et éventuellement (C), ainsi que pour la composition (B1) de la couche B, comprend de 51 à 100 % de motifs méthacrylate de méthyle et de 0 à 49 % de motifs comonomères à insaturation éthylénique copolymérisables avec le méthacrylate de méthyle.

**20.** Film selon l'une des revendications 1 à 16, **caractérisé en ce que** l'on utilise le même (co)polymère méthacrylique pour les couches A et C.

**21.** Film selon l'une des revendications 1 à 20, **caractérisé en ce que** le copolymère acrylique comprend de 80 à 99 % en poids de motifs méthacrylate de méthyle et de 1 à 20 % de l'acide (méth)acrylique ou de l'ester correspondant avec un radical alkyle comprenant de 1 à 4 atomes de carbone.

**22.** Utilisation du film tel que défini dans l'une des revendications 1 à 21 pour la technique de décoration durant moulage d'articles en résine thermoplastique.

**23.** Utilisation selon la revendication 22 pour la technique de moulage avec insertion simultanée de film.

**24.** Utilisation du film tel que défini dans l'une des revendications 1 à 23 pour revêtir un substrat.

**25.** Utilisation du film selon la revendication 24 **caractérisé en ce que** le substrat est en une résine thermoplastique.

**26.** Utilisation du film selon la revendication 24 **caractérisé en ce que** le substrat est en une résine thermodurcissable.

**27.** Utilisation du film selon la revendication 24 **caractérisé en ce que** le substrat est en bois, bois aggloméré, un matériel cellulosique, acier, aluminium, bois recouvert d'une couche de résine mélamine, mélamine-formol, mélamine-phénol.

**28.** Utilisation du film selon l'une des revendications 22 à 27 **caractérisé en ce qu'**un agent d'adhésion est disposé entre le substrat et le film acrylique.

Office européen des brevets

# RAPPORT DE RECHERCHE EUROPEENNE

Numéro de la demande
EP 04 29 2945

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X | US 2002/136853 A1 (KOYAMA KOJI ET AL) 26 septembre 2002 (2002-09-26) * alinéas [0028], [0031]; revendications 1-9; figures 1,2; exemples; tableaux 1,2 * | 1-6 | B32B27/18 B32B27/30 B29C51/14 C07F9/40 C08F4/00 C08F293/00 C08L33/12 B29C55/16 |
| D,X | US 6 444 298 B1 (TADOKORO YOSHIO ET AL) 3 septembre 2002 (2002-09-03) * colonne 3, ligne 42 - colonne 6, ligne 34 * * colonne 7, ligne 25-43; exemples 1,3,4 * | 1-6 | |
| X | PATENT ABSTRACTS OF JAPAN vol. 014, no. 501 (M-1043), 2 novembre 1990 (1990-11-02) & JP 02 208036 A (ASAHI CHEM IND CO LTD), 17 août 1990 (1990-08-17) * abrégé * | 1-6 | |
| D,A | EP 0 003 652 A (ROHM AND HAAS COMPANY) 22 août 1979 (1979-08-22) * revendications 1-9 * | 7,8 | **DOMAINES TECHNIQUES RECHERCHES (Int.Cl.7)** |
| D,A | US 3 793 402 A (OWENS F,US) 19 février 1974 (1974-02-19) * revendications * | 7,8 | B32B C08J C07F C08F C08L B29C |
| A | US 2003/031847 A1 (NUMRICH UWE ET AL) 13 février 2003 (2003-02-13) * alinéas [0001] - [0010], [0018] * * alinéas [0027] - [0032] * * alinéas [0050] - [0066] * | 1,7,9 | |
| A | EP 1 350 812 A (ATOFINA) 8 octobre 2003 (2003-10-08) * revendications 1,6-8,11,12; exemples 1-10 * | 1,7,9 | |

-/--

Le présent rapport a été établi pour toutes les revendications

| Lieu de la recherche | Date d'achèvement de la recherche | Examinateur |
|---|---|---|
| Munich | 29 mars 2005 | Lindner, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

1

EPO FORM 1503 03.82 (P04C02)

Office européen des brevets

# RAPPORT DE RECHERCHE EUROPEENNE

Numéro de la demande
EP 04 29 2945

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | US 2003/096075 A1 (DOLLASE THILO ET AL) 22 mai 2003 (2003-05-22)<br>* alinéas [0090] - [0110] *<br>* alinéas [0145] - [0151]; figure 2 *<br>* alinéa [0191] *<br>* revendications 1-13 *<br>----- | 1,4,5 | |
| D,A | EP 1 000 978 A (SUMITOMO CHEMICAL COMPANY LIMITED) 17 mai 2000 (2000-05-17)<br>* page 9, ligne 48 - page 10, ligne 17; revendications 1-3,7,9,12,16 *<br>----- | 1,3-5 | |
| A | US 2001/036543 A1 (SPARKS DARRELL L ET AL) 1 novembre 2001 (2001-11-01)<br>* revendications 1-16; exemples 1,2 *<br>----- | 1-3 | |
| A | FR 2 487 248 A (MONTEDISON SPA) 29 janvier 1982 (1982-01-29)<br>* page 4, ligne 33 - page 6, ligne 5; revendications 1-6 *<br>----- | 1-6 | |
| | | | DOMAINES TECHNIQUES RECHERCHES (Int.Cl.7) |
| A | EP 1 342 735 A (ATOFINA CHEMICALS, INC) 10 septembre 2003 (2003-09-10)<br>* revendications 1-5,15-20 *<br>----- | 15-18, 24-27 | |
| A | EP 1 142 913 A (ATOFINA) 10 octobre 2001 (2001-10-10)<br>* page 13, ligne 10-32 *<br>* exemples 4-8,13; tableau 1 *<br>* revendications 1-24 *<br>-----<br>-/-- | 9,11-18 | |

Le présent rapport a été établi pour toutes les revendications

1

| Lieu de la recherche | Date d'achèvement de la recherche | Examinateur |
|---|---|---|
| Munich | 29 mars 2005 | Lindner, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

Office européen des brevets

# RAPPORT DE RECHERCHE EUROPEENNE

Numéro de la demande
EP 04 29 2945

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | BENOIT D ET AL: "Development of a Universal Alkoxyamine for Living Free Radical Polymerizations" JOURNAL OF THE AMERICAN CHEMICAL SOCIETY, AMERICAN CHEMICAL SOCIETY, WASHINGTON, DC, US, vol. 121, no. 16, 28 avril 1999 (1999-04-28), pages 3904-3920, XP002115863 ISSN: 0002-7863 * le document en entier * ----- | 15-18 | |
| A | PATENT ABSTRACTS OF JAPAN vol. 2000, no. 03, 30 mars 2000 (2000-03-30) & JP 11 349782 A (KURARAY CO LTD), 21 décembre 1999 (1999-12-21) * abrégé * ----- | 9 | |

DOMAINES TECHNIQUES RECHERCHES (Int.Cl.7)

Le présent rapport a été établi pour toutes les revendications

1

| Lieu de la recherche | Date d'achèvement de la recherche | Examinateur |
|---|---|---|
| Munich | 29 mars 2005 | Lindner, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
..........................................................................................
& : membre de la même famille, document correspondant

EPO FORM 1503 03.82 (P04C02)

**ANNEXE AU RAPPORT DE RECHERCHE EUROPEENNE RELATIF A LA DEMANDE DE BREVET EUROPEEN NO.** EP 04 29 2945

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2005

| Document brevet cité au rapport de recherche | Date de publication | Membre(s) de la famille de brevet(s) | Date de publication |
|---|---|---|---|
| US 2002136853 A1 | 26-09-2002 | JP 2002292808 A | 09-10-2002 |
| US 6444298 B1 | 03-09-2002 | DE 10010466 A1 | 12-10-2000 |
| | | JP 2001260288 A | 25-09-2001 |
| JP 02208036 A | 17-08-1990 | JP 2745318 B2 | 28-04-1998 |
| EP 0003652 A | 22-08-1979 | US 4141935 A | 27-02-1979 |
| | | AU 4399179 A | 16-08-1979 |
| | | CA 1120634 A1 | 23-03-1982 |
| | | DE 2963703 D1 | 04-11-1982 |
| | | DK 53379 A ,B, | 11-08-1979 |
| | | EP 0003652 A1 | 22-08-1979 |
| | | ES 477572 A1 | 01-08-1979 |
| | | GB 1604150 A | 02-12-1981 |
| | | JP 1477622 C | 27-01-1989 |
| | | JP 54114595 A | 06-09-1979 |
| | | JP 63023205 B | 16-05-1988 |
| | | ZA 7900502 A | 26-03-1980 |
| US 3793402 A | 19-02-1974 | AR 194849 A1 | 24-08-1973 |
| | | AT 331508 B | 25-08-1976 |
| | | AT 940672 A | 15-11-1975 |
| | | AU 476645 B2 | 30-09-1976 |
| | | AU 4848072 A | 02-05-1974 |
| | | BE 790157 A4 | 16-04-1973 |
| | | CA 973648 A1 | 26-08-1975 |
| | | CH 562285 A5 | 30-05-1975 |
| | | DE 2253689 A1 | 10-05-1973 |
| | | FR 2159882 A6 | 22-06-1973 |
| | | GB 1414187 A | 19-11-1975 |
| | | IL 40734 A | 31-05-1976 |
| | | IT 1045246 B | 10-05-1980 |
| | | JP 57044641 A | 13-03-1982 |
| | | JP 1199485 C | 05-04-1984 |
| | | JP 48055233 A | 03-08-1973 |
| | | JP 55027576 B | 22-07-1980 |
| | | NL 7214935 A ,B, | 08-05-1973 |
| | | NO 142223 B | 08-04-1980 |
| | | SE 391942 B | 07-03-1977 |
| | | ZA 7207741 A | 19-12-1973 |
| US 2003031847 A1 | 13-02-2003 | AT 268352 T | 15-06-2004 |
| | | AU 745221 B2 | 14-03-2002 |
| | | AU 1965799 A | 28-06-1999 |
| | | BR 9813383 A | 10-10-2000 |

EPO FORM P0460

Pour tout renseignement concernant cette annexe : voir Journal Officiel de l'Office européen des brevets, No.12/82

**ANNEXE AU RAPPORT DE RECHERCHE EUROPEENNE RELATIF A LA DEMANDE DE BREVET EUROPEEN NO.** EP 04 29 2945

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2005

| Document brevet cité au rapport de recherche | Date de publication | Membre(s) de la famille de brevet(s) | Date de publication |
|---|---|---|---|
| US 2003031847 A1 | | CA 2312787 A1 | 17-06-1999 |
| | | CN 1280593 A | 17-01-2001 |
| | | DE 59811522 D1 | 08-07-2004 |
| | | DK 1060209 T3 | 04-10-2004 |
| | | WO 9929766 A1 | 17-06-1999 |
| | | EP 1060209 A1 | 20-12-2000 |
| | | ES 2219929 T3 | 01-12-2004 |
| | | HR 20000374 A1 | 31-12-2000 |
| | | HU 0100068 A2 | 28-05-2001 |
| | | JP 2001525277 T | 11-12-2001 |
| | | NZ 505447 A | 25-07-2003 |
| | | PL 340802 A1 | 26-02-2001 |
| | | US 6475420 B1 | 05-11-2002 |
| EP 1350812 A | 08-10-2003 | US 2003216510 A1 | 20-11-2003 |
| | | AU 2003203567 A1 | 23-10-2003 |
| | | CA 2423773 A1 | 02-10-2003 |
| | | CN 1450117 A | 22-10-2003 |
| | | EP 1350812 A2 | 08-10-2003 |
| | | JP 2004002785 A | 08-01-2004 |
| | | NZ 525092 A | 27-08-2004 |
| US 2003096075 A1 | 22-05-2003 | DE 10129608 A1 | 28-05-2003 |
| | | WO 03000794 A1 | 03-01-2003 |
| | | WO 03000819 A1 | 03-01-2003 |
| | | EP 1446450 A1 | 18-08-2004 |
| | | EP 1474494 A1 | 10-11-2004 |
| EP 1000978 A | 17-05-2000 | AU 8461498 A | 22-02-1999 |
| | | EP 1000978 A1 | 17-05-2000 |
| | | WO 9906485 A1 | 11-02-1999 |
| | | JP 2000086853 A | 28-03-2000 |
| | | TW 501970 B | 11-09-2002 |
| | | US 2002164490 A1 | 07-11-2002 |
| US 2001036543 A1 | 01-11-2001 | AU 4779901 A | 08-10-2001 |
| | | CN 1422211 A | 04-06-2003 |
| | | EP 1272344 A1 | 08-01-2003 |
| | | JP 2003528750 T | 30-09-2003 |
| | | WO 0172513 A1 | 04-10-2001 |
| FR 2487248 A | 29-01-1982 | IT 1132231 B | 25-06-1986 |
| | | DE 3128985 A1 | 06-05-1982 |
| | | DK 322981 A ,B, | 25-01-1982 |
| | | FR 2487248 A1 | 29-01-1982 |
| | | GB 2080199 A ,B | 03-02-1982 |

EPO FORM P0460

Pour tout renseignement concernant cette annexe : voir Journal Officiel de l'Office européen des brevets, No.12/82

## ANNEXE AU RAPPORT DE RECHERCHE EUROPEENNE RELATIF A LA DEMANDE DE BREVET EUROPEEN NO. EP 04 29 2945

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

29-03-2005

| Document brevet cité au rapport de recherche | Date de publication | Membre(s) de la famille de brevet(s) | Date de publication |
|---|---|---|---|
| FR 2487248 A | | SE 454151 B | 11-04-1988 |
| | | SE 8104450 A | 25-01-1982 |
| EP 1342735 A | 10-09-2003 | US 2003149205 A1 | 07-08-2003 |
| | | AU 2002301897 A1 | 21-08-2003 |
| | | CA 2412191 A1 | 01-08-2003 |
| | | EP 1342735 A2 | 10-09-2003 |
| | | JP 2004002678 A | 08-01-2004 |
| | | MX PA02011685 A | 08-08-2003 |
| EP 1142913 A | 10-10-2001 | FR 2807439 A1 | 12-10-2001 |
| | | CA 2343339 A1 | 07-10-2001 |
| | | CN 1318570 A ,C | 24-10-2001 |
| | | EP 1142913 A1 | 10-10-2001 |
| | | JP 2001316409 A | 13-11-2001 |
| | | US 2002040117 A1 | 04-04-2002 |
| JP 11349782 A | 21-12-1999 | AUCUN | |

EPO FORM P0460

Pour tout renseignement concernant cette annexe : voir Journal Officiel de l'Office européen des brevets, No.12/82